# EUROPÄISCHE PATENTSCHRIFT

(11) **EP 2 376 752 B1**
(45) Veröffentlichungstag und Bekanntmachung des Hinweises auf die Patenterteilung: **08.01.2014**
(21) Anmeldenummer: 09760811.1
(22) Anmeldetag: 18.11.2009
(51) Int. Cl.: F01N 3/36, F01N 3/20, F01N 3/08

(54) **Verfahren und Vorrichtung zur tropfenförmigen Zugabe eines flüssigen Reduktionsmittels in eine Abgasleitung**
Method and device for the addition in drop form of a liquid reduction agent to an exhaust gas line
Procédé et dispositif permettant d'introduire un agent de réduction liquide sous forme de gouttes dans une conduite d'échappement

(30) Priorität: 17.12.2008 DE 102008063488
(43) Veröffentlichungstag der Anmeldung: 19.10.2011
(60) Teilanmeldung: 13190509.3
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2009/065392
(87) Internationale Veröffentlichungsnummer: WO 2010/076084

(56) Entgegenhaltungen:
- EP-A1- 1 656 986
- EP-A2- 1 291 498
- DE-A1-102006 051 788
- US-A1- 2008 261 801

## Beschreibung

Die vorliegende Erfindung betrifft ein Verfahren sowie eine Vorrichtung zur tropfenförmigen Zugabe eines flüssigen Reduktionsmittels in eine Abgasleitung einer Verbrennungskraftmaschine.

Für die Systeme zur Abgasreinigung von Verbrennungskraftmaschinen, insbesondere von Dieselmotoren, werden Abgasbehandlungskomponenten zur Abgasreinigung in Abgasleitungen eingesetzt, die für den ordnungsgemäßen Betrieb wenigstens zeitweise der Zufuhr eines Reaktionsmittels bedürfen. Zu diesen Abgasbehandlungskomponenten zählen insbesondere SCR-Katalysatoren, denen zur selektiven Reduktion von Stickoxiden Ammoniak in freier oder in gebundener Form als Reduktionsmittel, beispielsweise einer Harnstofflösung, zugeführt wird. Weiter sind solche Elemente auch oxidationskatalytische Abgasbehandlungskomponenten, denen zur Abgasauflieizung Kohlenwasserstoff-Verbindungen (Kraftstoff) als Reduktionsmittel zugeführt wird. Diese Auflieizung des Abgasstromes ist bei einer thermischen Rußregeneration eines Partikelfilters oder für die Schwefelregeneration von Stickoxidspeicherkatalysatoren vorgesehen.

Für eine sehr gute Abgasreinigung sind eine möglichst gleichmäßige Verteilung und eine möglichst feine Zerstäubung des Reduktionsmittels in dem Querschnitt der Abgasleitung gewünscht.

Durch die Zugabe des Reduktionsmittels in eine Richtung entgegen der Strömungsrichtung des Abgases, wie sie in der EP-A-1 890 016 beschrieben ist, wird durch die höhere Relativgeschwindigkeit des Reduktionsmittels zum Abgasstrom eine feinere und bessere Verteilung des Reduktionsmittels erreicht. Dieser Effekt wird zusätzlich unterstützt durch das Auftreffen des Reduktionsmittels auf die Abströmseite der Abgasbehandlungskomponente, weil die auftreffenden Tropfen des Reduktionsmittels zusätzlich zerstäubt werden bzw. von den Oberflächen der Abgasbehandlungskomponente direkt in den Abgasstrom verdampfen können.

Die Verteilung des Reduktionsmittels in einem Querschnitt der Abgasleitung bzw. die Beaufschlagung einer Abströmseite einer Abgasbehandlungskomponente ist dabei stark abhängig von dem Betriebszustand der Verbrennungskraftmaschine. Bei hohen Strömungsgeschwindigkeiten des Abgases wird ein durch eine Zugabeeinheit fein zerstäubtes Reduktionsmittel schnell umgelenkt, so dass eine Beaufschlagung einer Abströmseite einer Abgasbehandlungskomponente zumindest nur noch teilweise erfolgt.

Die DE-A1-10 2006 051 788 offenbart ein Abgasnachbehandlungssystem zur zur Nachbehandlung von Abgas eines Verbrennungsmotors umfassend eine Abgasleitung zur Führung eines Abgasstroms, der von dem Verbrennungsmotor abgegeben wird. In der Abgasleitung ist ein Bauelement angeordnet, dass von dem Abgasstrom umströmbar oder durchströmbar ist. Dieses Bauelement ist beispielsweise ein Katalysator. Außerdem ist in der Abgasleitung eine Injektionsvorrichtung angeordnet mit der eine Reduktionsmittelflüssigkeit in den Abgasstrom abgegeben werden kann, so dass die Reduktionsmittelflüssigkeit zumindest teilweise auf den Oberflächenbereich des Bauelements trifft. Die DE-A1-10 2006 051 788 offenbart, dass die Injektionsvorrichtung die Reduktionsmittelflüssigkeit in Form von kleinen Tröpfchen abgibt, wobei die Größe der Tröpfen in einem Bereich zwischen 0,03 mm und 0,05 mm Durchmesser festgelegt ist damit die Tröpfchen im überwiegenden Betriebsbereich des Verbrennungsmotors auf den Oberflächenbereich auftreffen.

Aufgabe der Erfindung ist es, die mit Bezug auf den Stand der Technik geschilderten Probleme zumindest teilweise zu lösen und insbesondere ein Verfahren sowie eine Vorrichtung anzugeben, durch das bzw. durch die eine möglichst gleichmäßige Verteilung des Reduktionsmittels im Abgasstrom insbesondere in allen Betriebspunkten einer Verbrennungskraftmaschine erreicht wird, um somit die Verdampfung des Reduktionsmittels zu verbessern.

Diese Aufgaben werden gelöst mit einem Verfahren gemäß den Merkmalen des Patentanspruchs 1 sowie durch eine Vorrichtung gemäß den Merkmalen des Patentanspruchs 10. Weitere vorteilhafte Ausgestaltungen der Erfindung sind in den abhängig formulierten Patentansprüchen angegeben. Es ist darauf hinzuweisen, dass die in den abhängig formulierten Patentansprüchen aufgeführten Merkmale in beliebiger, technologisch sinnvoller, Weise miteinander kombiniert werden können und weitere Ausfübrungsformen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Vorliegend wird die Aufgabe durch ein Verfahren zur tropfenförmigen Zugabe eines flüssigen Reduktionsmittels, welches eine Harnstoff-Wasser-Lösung ist, in eine Abgasleitung einer Verbrennungskraftmaschine gelöst, wobei das Verfahren wenigstens die folgenden Schritte umfasst:
a) Erfassen zumindest eines Abgasparameters während des Betriebs der Verbrennungskraftmaschine,
b) Bestimmen einer Größe eines Tropfens des zuzugebenden Reduktionsmittels in Abhängigkeit des Abgasparameters,
c) Einstellen eines ersten Förderdruckes des Reduktionsmittels hin zur Abgasleitung in Abhängigkeit der bestimmten Größe des Tropfens,
d) Zugabe des Reduktionsmittels über eine Zugabeeinheit in die Abgasleitung.

Das Erfassen eines Abgasparameters im Betrieb der Verbrennungskraftmaschine kann insbesondere über Sensoren in der Abgasleitung und/oder in der Verbrennungskraftmaschine erfolgen und/oder aber auch aus den Betriebsbedingungen der Verbrennungskraftmaschine abgeleitet werden.

Die Größe eines Tropfens eines Reduktionsmittels ist im Wesentlichen abhängig von dem Förderdruck des Reduktionsmittels und der Auslegung der Düsenöffnung einer Zugabeeinheit sowie von der chemischen Zusammensetzung bzw. des physikalischen Zustandes des Reduktionsmittels selbst. Die hier bestimmte Größe eines Tropfens dient insbesondere dazu, dass der Tropfen mit hoher Wahrscheinlichkeit eine Stirnseite einer Abgasbehandlungskomponente, die insbesondere stromaufwärts einer Zugabeeinheit des Reduktionsmittels in der Abgasleitung angeordnet ist, beaufschlagt, so dass eine Verdampfung und/oder feine Verteilung des Reduktionsmittels (insbesondere über den gesamten Querschnitt der Abgasleitung) ermöglicht wird. Durch die Größe des Tropfens wird die Flugbahn des Tropfens in der Abgasleitung beeinflusst, insbesondere steigt mit zunehmender Größe des Tropfens auch die Trägheit des Tropfens gegenüber einer Ablenkung durch den Abgasstrom.

Dabei wird die Größe des zuzugebenden Tropfens Reduktionsmittel insbesondere durch die Einstellung des ersten Förderdruckes des Reduktionsmittels in einer Reduktionsmittelleitung eingestellt. Je höher also z. B. der erste Förderdruck gewählt ist, umso kleiner ist z. B. der jeweils erzeugte Tropfen.

Im Gegensatz zur allgemeinen Auffassung, dass bei höheren Abgasgeschwindigkeiten das Reduktionsmittel mit möglichst hohem Druck der Abgasleitung zugeführt werden sollte, um eine möglichst große Weglänge entgegen der Strömungsrichtung des Abgases in Richtung einer Stirnseite einer Abgasbehandlungskomponente zurückzulegen und auf diese aufzutreffen, ist es hier also vorgesehen, den Druck insbesondere bei erhöhter Abgasgeschwindigkeit herabzusetzen, so dass größere Tropfen gebildet werden, die eine entsprechend geringere Ablenkung durch das Abgas erfahren. Infolge der geringeren Ablenkung erreichen die Tropfen auch gegenüber der Zugabeeinheit beabstandete Bereiche der Stirnseite einer Abgasbehandlungskomponente, an der das Reduktionsmittel dann verdampfen kann. Somit ist eine gewünschte Verteilung des Reduktionsmittels über den Querschnitt einer Abgasleitung einstellbar. Dementsprechend erfolgt die Zugabe des Reduktionsmittels in die Abgasleitung über eine Zugabeeinheit nach Einstellung des ersten Förderdruckes, so dass Tropfen des Reduktionsmittels mit bestimmter Größe gebildet werden.

Bevorzugt ist auch ein Verfahren, bei dem die Zugabe des flüssigen Reduktionsmittels stromabwärts einer Abgasbehandlungskomponente und entgegen einer Strömungsrichtung eines Abgases in der Abgasleitung erfolgt und die Größe eines Tropfens derart eingestellt wird, dass eine gleichmäßige Verteilung des Reduktionsmittels auf einem Auftreffbereich der Abgasbehandlungskomponente erreicht wird.

Die Zugabe des flüssigen Reduktionsmittels gegen die Strömungsrichtung des Abgases hat zur Folge, dass eine Ablenkung und/oder Aufweitung des Strahls an flüssigem Reduktionsmittel einsetzt. Dies führt nun dazu, dass der Zugabebereich, also die tatsächlich benetzte Fläche auch in der Abgasbehandlungskomponente auch in einem statischen Betrieb der Zugabe etwas variiert. Gleichwohl kann es, gerade bei verhältnismäßig gleichbleibenden Abgas-Parametern dazu kommen, dass immer wieder der gleiche Bereich der Abgasbehandlungskomponente mit Reduktionsmittel versehen wird. Dies kann zu lokalen Abkühlungen der Abgasbehandlungskomponente führen und/oder zu einer verminderten Effektivität, weil die Abgaswartungskomponente bereits mit Reduktionsmittel gesättigt ist und das Reduktionsmittel folglich nicht in der gewünschten Weise eingelagert bzw. verdampft werden kann. Mit der vorstehend vorgeschlagenen gezielten Beeinflussung der Zugabe des flüssigen Reduktionsmittels erfolgt eine im Wesentlichen gleichmäßige Verteilung des Reduktionsmittels auf den Auftreffbereich der Abgasbehandlungskomponente. Als "Auftreffbereich" ist der Bereich der Stirnseite der Abgasbehandlungskomponente anzusehen, der von der Zugabeeinheit bzw. einer einzelnen Düse unter normalen Bedingungen während des Betriebes der Verbrennungskraftmaschine erreicht werden kann. Für den Fall, dass mit einer Düse die gesamte Stirnfläche der Abgasbehandlungskomponente erreicht werden kann, stimmt der Auftreffbereich mit der Stirnfläche überein, sonst stellt die Auftrefffläche regelmäßig einen kleineren Teilbereich der Stirnfläche dar. Für den zuletzt angesprochenen Fall wird regelmäßig vorgesehen, dass die Zugabeeinheit so ausgestaltet ist, dass die Summe aller Auftreftbereiche flächenmäßig mindestens die Fläche der Stirnfläche überdeckt, wobei sich ggf. auch Auftreffbereiche unterschiedlicher Düsen überlagern können. Der Auftreffbereich stellt regelmäßig einen "aufgeweiteten" Zugangsbereich für die Zugabeeinheit dar. Zur Ermittlung des Auftreffbereichs kann bspw. eine Düse mit konstanten Bedingungen flüssiges Reduktionsmittel zugeben, wobei ermittelt wird, in welchem Auftreffbereich das Reduktionsmittel bei üblichen Betriebsbedingungen an der Verbrennungskraftmaschine die Stirnseite der Abgasbehandlungskomponente erreicht. Folglich stellt der Zugabebereich den Teilbereich dar, der bei einer konkreten Situation der Abgas-Parameter tatsächlich benetzt wird und der Auftreffbereich den Bereich, dem die Zugabebereiche bei unterschiedlichen Situationen der Abgas-Parameter erreichen kann. Folglich wird hier auch vorgeschlagen, diese Variationen des Zugabebereiches zu nutzen, um eine möglichst gleichmäßige Verteilung des Reduktionsmittels im (potentiellen) Auftreffbereich der Abgasbehandlungskomponente anzustrengen. Die "gleichmäßige" Verteilung ist dabei insbesondere seitlich gemittelt zu verstehen. Offensichtlich ist, dass der Auftreffbereich in mehreren Zyklen mit flüssigem Reduktionsmittel versehen wird. Dabei sind beim nächst folgenden Zugabe-Zyklus vorrangig die Bereiche der Abgasbehandlungskomponente zu benetzen, die im Auftreffbereich eine geringere Menge an Reduktionsmittel aufweisen. Dabei sind ggf. auch das Anlagerungsvermögen der Abgasbehandlungskomponente und/oder deren Temperatur zu berücksichtigen.

Infolge der Beaufschlagung der rückwärtigen Stirnseite einer Abgasbehandlungs-komponente mit dem Reduktionsmittel wird erreicht, dass das Reduktionsmittel von der Oberfläche der Abgasbehandlungskomponente direkt in den Abgasstrom verdampfen kann. Somit ist eine kontinuierliche Schadstoffumsetzung durch das Reduktionsmittel bzw. eine kontinuierliche Hydrolyse des Reduktionsmittels möglich, trotz einer diskontinuierlichen Zugabe des Reduktionsmittels in die Abgasleitung. Die zuzuführende Menge des Reduktionsmittels kann dann durch die Frequenz der Zugabe des Reduktionsmittels durch die Zugabeeinheit geregelt werden. Dementsprechend ist eine angepasste Zuführung von Reduktionsmittel mit niedrigem Förderdruck des Reduktionsmittels - und damit geringerem Volumenstrom des Reduktionsmittels - bei gleichzeitig hohen Abgasvolumenstrom und dementsprechend großem Bedarf an Reduktionsmittel möglich.

Gemäß einer vorteilhaften Ausführungsform des Verfahrens ist der Abgasparameter zumindest ein Abgas-Parameter der Gruppe:
- Abgasvolumenstrom,
- Abgasströmungsgeschwindigkeit,
- Abgasmassenstrom,
- Abgastemperatur,
- Abgasdruck.

Gegebenenfalls kann auch aus mehreren relevanten Abgas-Parametern ein Abgasparameter abgeleitet werden. Die Abgas-Parameter können an bevorzugten Stellen der Abgasleitung bzw. der Verbrennungskraftmaschine erfasst werden und durch gegebenenfalls vorhandene Steuerungen auf den in der Abgasleitung an der Position der Zugabeeinheit vorherrschenden Abgasparameter umgerechnet werden. Damit wird eine Einbringung des Reduktionsmittels in die Abgasleitung jeweils in Abhängigkeit zumindest eines Abgasparameters des Abgases bestimmt.

Gemäß einer vorteilhaften Weiterbildung des Verfahrens ist in Schritt c) der erste Förderdruck zwischen 3 bar und 25 bar einstellbar, insbesondere zwischen 3 und 10 bar. Ein derartiger Druckbereich ist vorteilhaft, weil die Anlagenkomponenten hierfür günstig herstellbar und dementsprechend unter geringem Kostenaufwand in ein Kraftfahrzeug integrierbar sind. Zudem sind Pumpen mit einem für diesen Anwendungsfall ausreichenden Volumenstrom für diese Druckwerte weitläufig verfügbar und ebenfalls mit vertretbarem Kostenaufwand in ein Kraftfahrzeug zu integrieren.

Weiterhin wird als vorteilhaft angesehen, dass bei der Zugabe des Reduktionsmittels zumindest ein Zugabe-Parameter der nachfolgenden Gruppe variiert wird:
- der Förderdruck,
- die Größe der Tropfen,
- der Zugabebereich auf der Abgasbehandlungskomponente,
- ein Zugabeort des Reduktionsmittels,
- eine Zugaberichtung des Reduktionsmittels.

Im Hinblick auf die vorstehend angesprochenen Variationsmöglichkeiten ist selbstverständlich auch möglich, mehrere der Zugabe-Parameter bei zeitlich versetzten Zugabe-Zyklen zu variieren oder konstant zu halten. Insbesondere werden die Zugabe-Parameter über entsprechende Stellmittel bzw. Steuerungsmittel der abgas-externen Vorrichtung zur Förderung des Reduktionsmittels veranlasst. Insbesondere führt eine Variation des Förderdrucks gleichzeitig zur Variation der Größe der Tropfen und/oder des Zugabebereichs. Sind bspw. mehrere Düsen zur Benetzung der Abgasbehandlungskomponente vorgesehen, kann durch eine entsprechende Ansteuerung der unterschiedlichen Düsen der Zugabeort des Reduktionsmittels variiert werden (Ort der Düse). Sollten bewegliche, verschwenkbare Düsen bei der Zugabeeinheit vorgesehen sein, kann die Zugaberichtung ebenfalls in Folge einer solchen Bewegung gezielt eingestellt werden.

Zudem kann das Verfahren in der Art weitergebildet werden, dass mindestens ein Zugabe-Parameter variiert wird während ein Abgas-Parameter konstant ist. Hierbei ist ganz besonders bevorzugt, dass eine leichte Variation des Förderdrucks realisiert wird, um im Falle langer Fahrten der Verbrennungskraftmaschine mit im Wesentlichen konstanten Abgas-Parametern den Zugabebereich der Tropfen leicht zu verschieben. Dadurch wird insbesondere eine lokale Abkühlung der Abgasbehandlungskomponente im Zugabebereich bzw. Aufgabebereich vermieden.

Gemäß einer weiteren besonders vorteilhaften Ausführungsform des Verfahrens erfolgt in Schritt d) die Zugabe mit einer Größe der Tropfen zwischen 10 µm und 200 µm mittlerer Sauter-Durchmesser, insbesondere zwischen 30 µm und 150 µm. Dabei ist der Sauter-Durchmesser folgendermaßen definiert: Würde man das gesamte Volumen der Partikel (hier die Tropfen) einer Schüttung in gleichgroße Kugeln umformen, deren gesamte Oberfläche gleich der gesamten Oberfläche der Partikel ist, dann hätten diese Partikel den Sauter-Durchmesser als Durchmesser.

Es hat sich dabei in zahlreichen Versuchen gezeigt, dass bei einer bevorzugten Ausführung der Zugabeeinheit als Vierlochdüse und AdBlue als Reduktionsmittel, also eine Wasser-Harnstoff-Lösung, bei einem ersten Förderdruck von 8 bar ein mittlerer Sauter-Durchmesser der Tropfen von 45 µm erreicht wird, während bei 3 bar 137 µm als mittlerer Sauter-Durchmesser vorliegt.

Eine weitere vorteilhafte Ausführungsform des Verfahrens sieht vor, dass zumindest 60 % der in Schritt d) zugegeben Tropfen eine entsprechend Schritt b) bestimmte Größe aufweisen oder größer sind. Bevorzugt liegt der Anteil sogar oberhalb von 80 % oder sogar 92 %. Ziel des Verfahrens ist es, eine derartige Größe der Tropfen mit einem bestimmten ersten Förderdruck zu erzeugen, dass diese Tropfen unter Berücksichtigung von Abgasparametern bei Zugabe entgegen der Strömungsrichtung des Abgases einen bestimmten Weg entgegen der Strömungsrichtung des Abgases zurücklegen und somit bevorzugt gleichmäßig über den Querschnitt der Abgasleitung verteilt auf eine Stirnfläche einer Abgasbehandlungskomponente auftreffen. Dementsprechend sind durch dieses Verfahren Tropfen zu erzeugen, die zumindest eine bestimmte Größe aufweisen, so dass zumindest dieser Anteil an Tropfen einen festgelegten Mindestweg zurücklegen kann.

Außerdem wird auch noch vorgeschlagen, dass die Zugabe des Reduktionsmittels derart vorgenommen wird, dass während des Betriebes der Verbrennungskraftmaschine eine gleichmäßige Benetzung der Stirnseite der Abgasbehandlungskomponente mit den Tropfen des Reduktionsmittels erfolgt.

Gerade bei sehr großen Stirnseiten der Abgasbehandlungskomponente, wie sie bspw. bei Abgassystemen von Lastkraftwagen vorkommen, sollte die Zugabe des flüssigen Reduktionsmittels gezielt in einer gewünschten Weise über die gesamte Stirnseite realisiert werden. Aus diesem Grund wird insbesondere vorgeschlagen, dass die hier offenbarten Strategien eingesetzt werden, um eine (zeitlich gemittelte) gleichmäßige Benetzung der (rückwärtigen) Stirnseite erfolgt. Insoweit kann hier auf die Erläuterungen zur gleichmäßigen Benetzung des Auftreffbereiches verwiesen werden.

Die erfindungsgemäße Vorrichtung, auf die sich die Erfindung ferner richtet, dient der tropfenförmigen Zugabe eines flüssigen Reduktionsmittels, welches eine Harnstoff-Wasser-Lösung ist, in eine Abgasleitung, zumindest aufweisend:
- eine Pumpe zum Fördern des Reduktionsmittels,
- eine Zugabeeinheit zum Einbringen des Reduktionsmittels in die Abgasleitung,
- eine Reduktionsmittelleitung zur strömungstechnischen Verbindung der Pumpe mit der Zugabeeinheit,
- ein Druckregelventil und ein Druckschwingungsdämpfer, beide angeordnet zwischen der Pumpe und der Zugabeeinheit, sowie
- eine Steuereinheit zur Steuerung von zumindest Pumpe, Zugabeeinheit und Druckregelventil.

Die Steuereinheit dient insbesondere zur Regelung bzw. Steuerung der Komponenten Pumpe, Zugabeeinheit und Druckregelventil sowie gegebenenfalls weiterer Komponenten der Vorrichtung oder des Kraftfahrzeuges. Dabei dient die Steuerung dazu, eine bestimmte Größe der Tropfen des flüssigen Reduktionsmittels an der Zugabeeinheit zur Zugabe des Reduktionsmittels in die Abgasleitung durch die Steuerung eines ersten Förderdruckes einzustellen.

Der erste Förderdruck stellt insbesondere den Druck dar, unter dem das Reduktionsmittel über die Zugabeeinheit in die Abgasleitung abgegeben werden soll. Dieser erste Förderdruck wird z. B. erzeugt, indem eine Pumpe und ein Druckregelventil entsprechend betätigt werden. Bevorzugt fördert die Pumpe regelmäßig auf einen (konstanten, maximalen) zweiten Förderdruck, der durch das Druckregelventil dann auf den jeweiligen ersten Förderdruck abgebaut wird. Der zweite Förderdruck ist ein in der Reduktionsmittelleitung vorherrschender Druck, von dem ausgehend der erste Förderdruck, der eine Zugabe des flüssigen Reduktionsmittels mit bestimmter Größe der Tropfen ermöglicht, eingestellt werden kann.

Insbesondere wird der erste Förderdruck gegenüber einem in der Reduktionsmittelleitung vorherrschenden zweiten Förderdruck durch Fördern und/oder Rückfördem mit der Pumpe oder durch Öffnen des Druckregelventils eingestellt. Es ist insbesondere auch möglich, dass der erste Förderdruck durch die Zugabe von Reduktionsmittel in die Abgasleitung über die Zugabeeinheit eingestellt wird, wobei dann die Pumpe nicht fördert. Somit erfolgt dann zumindest zum Teil eine Zugabe des Reduktionsmittels mit kleinerer Größe der Tropfen (bei höherem zweitem Förderdruck in der Reduktionsmittelleitung) bis der zweite Förderdruck auf den ersten Förderdruck abgebaut ist. Erst bei Erreichen des ersten Förderdruckes erfolgt in dieser Ausgestaltung die Zugabe mit der unter Schritt b) des Verfahrens bestimmten Größe der Tropfen.

Insbesondere ist die Vorrichtung geeignet zur Durchführung des erfindungsgemäßen Verfahrens.

Das Druckregelventil ist also insbesondere dafür vorgesehen, den ersten Förderdruck entsprechend Schritt c) des erfindungsgemäßen Verfahrens einzustellen.

Ein Druckschwingungsdämpfer ist insbesondere erforderlich, da in der Reduktionsmittelleitung, in der ein erster Förderdruck eingestellt wird um einen Tropfen bestimmter Größe zu erzeugen, im Betrieb der Verbrennungskraftmaschine und während der Ausbringung von Reduktionsmittel aus der Zugabeeinheit Druckschwankungen auftreten. Dies ist insbesondere abhängig von der Ausbringungsmenge aus der Zugabeeinheit und zum anderen von der Förderleistung der Pumpe und deren Förderungsart (kontinuierlich oder diskontinuierlich). Weiterhin wird der erste Förderdruck beeinflusst durch ein Druckregelventil, dass bei Überschreiten eines bestimmten Druckes in der Reduktionsmittelleitung oder zur Einstellung des ersten Förderdruckes Reduktionsmittel insbesondere über eine Rücklaufleitung in einen Reduktionsmitteltank zurückführt. Druckschwankungen können zudem durch diskontinuierliche Öffnungs- und Schließbewegungen einer Düse der Zugabeeinheit entstehen. Hierdurch können auch Druckschwingungen gebildet werden, die die Reduktionsmittelleitung wellenartig durchströmen.

Der Druckschwingungsdämpfer dient insbesondere also dazu, den in der Reduktionsmittelleitung zur Zugabe von Tropfen bestimmter Größe eingestellten ersten Förderdruck möglichst konstant zu halten bzw. den in der Reduktionsmittelleitung vorliegenden zweiten Förderdruck dem (in Schritt c) bestimmten) ersten Förderdruck anzunähern. Schwankungen des ersten Förderdruckes werden somit reduziert bzw. verhindert. Dabei ist es besonders vorteilhaft, dass der zweite Förderdruck vor der Zugabeeinheit bzw. in der Reduktionsmittelleitung in Schritt d) während des Betriebes der Verbrennungskraftmaschine nur um höchstens 10 % von dem in Schritt c) bestimmten bzw. einzustellenden ersten Förderdruck abweicht, insbesondere nur um 5 %. Öffnet die Zugabeeinheit zu der Abgasleitung also zu einem Zeitpunkt, an dem der erste Förderdruck durch Schwankungen des Druckes in der Reduktionsmittelleitung nicht erreicht ist, erfolgt somit die Zugabe unter einem zweiten Förderdruck. Infolge der Reduzierung der Schwankungen des Druckes in der Reduktionsmittelleitung durch den Druckschwingungsdämpfer erfolgt dann die Zugabe des Reduktionsmittels in die Abgasleitung mit einem dem ersten Förderdruck weitgehend angenäherten zweiten Förderdruck.

Die Steuereinheit ist mit zumindest einem Abgassensor zum Bestimmen wenigstens eines Abgasparameters verbunden, wobei hier insbesondere die bereits in der Beschreibung des Verfahrens angeführten Abgasparameter umfasst sind. Die Steuereinheit dient also auch dazu, zumindest einen ersten Förderdruck in der Reduktionsmittelleitung einzustellen, der geeignet ist, Tropfen einer Größe zu erzeugen, die in die Abgasleitung durch die Zugabeeinheit überführt werden und dann einen Mindestweg entgegen der Strömungsrichtung des Abgases zurücklegen, um insbesondere auf eine Stirnseite einer Abgasbehandlungseinheit in der Abgasleitung aufzutreffen. Die Größe der Tropfen wird derart angepasst, dass eine möglichst gleichmäßige Verteilung des Reduktionsmittels auf dieser Stirnseite über den gesamten Querschnitt der Abgasleitung erreicht wird.

Gemäß einer vorteilhaften Weiterbildung ist der Abgassensor zum Bestimmen wenigstens eines Abgasparameters an der Luftzuführseite einer Verbrennungskraftmaschine angeordnet. Die Abgasparameter werden somit hergeleitet aus Parametern der Saugseite der Verbrennungskraftmaschine. Insbesondere kann der Abgassensor hier als Massenstrom-Sensor oder Unterdruck-Sensor ausgeführt sein. Insbesondere wird das Messsignal eines Abgassensors mit Parametern der Verbrennungskraftmaschine kombiniert, z. B. mit der Drehzahl der Verbrennungskraftmaschine.

Dabei kann weiter die Zugabeeinheit zumindest eine Mehrzahl von Düsen oder wenigstens eine bewegliche Düse umfassen.

Selbstverständlich kann auch eine Zugabeeinheit vorgesehen sein, bei der eine Mehrzahl von Düsen vorgesehen ist, wobei dort zumindest eine beweglich, insbesondere verschwenkbar, ausgeführt ist. Bei einer Mehrzahl von Düsen ist die Anordnung so zu wählen, dass die Düsen die gesamte Stirnfläche der Abgasbehandlungskomponente erreichen, also die Summe der Auftreffbereiche mindestens die Stirnfläche abdeckt. Hierzu können mehrere Düsen, bspw. drei, vier oder fünf Düsen über den Umfang der Abgasleitung bzw. der rückwärtigen Stirnseite der Abgasbehandlungskomponente angeordnet sein. Für den Fall, dass eine bewegliche Düse vorgesehen ist, wird eine entsprechende Gasdichtelagerung und ein Verstellmotor erforderlich sein.

Besonders vorteilhaft ist es, dass die Steuereinheit der erfindungsgemäßen Vorrichtung zur Durchführung des erfindungsgemäßen Verfahrens eingerichtet ist, und dass weiter die Vorrichtung und/oder das Verfahren insbesondere zum Einsatz in einem Kraftfahrzeug vorgesehen sind.

Bevorzugt betrifft das Verfahren bzw. die Vorrichtung die Zugabe von flüssiger Harnstoff-Wasser-Lösung, wobei die Abgasbehandlungseinheit zumindest an einem Abschnitt einer der Zugabeeinheit gegenüberliegenden Stirnseite eine Hydrolysebeschichtung aufweist.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die sie jedoch nicht beschränkt sind. Für gleiche Gegenstände werden in den Figuren auch gleiche Bezugszeichen verwendet. Es zeigen schematisch:
Fig. 1: eine Vorrichtung in einem Kraftfahrzeug;
Fig. 2: einen Ausschnitt einer Abgasleitung im Betrieb des Kraftfahrzeuges;
Fig. 3: eine weitere Ausgestaltung der Vorrichtung in einem Kraftfahrzeug; und
Fig. 4: eine Veranschaulichung einen variierenden Zugabe von Reduktionsmittel.

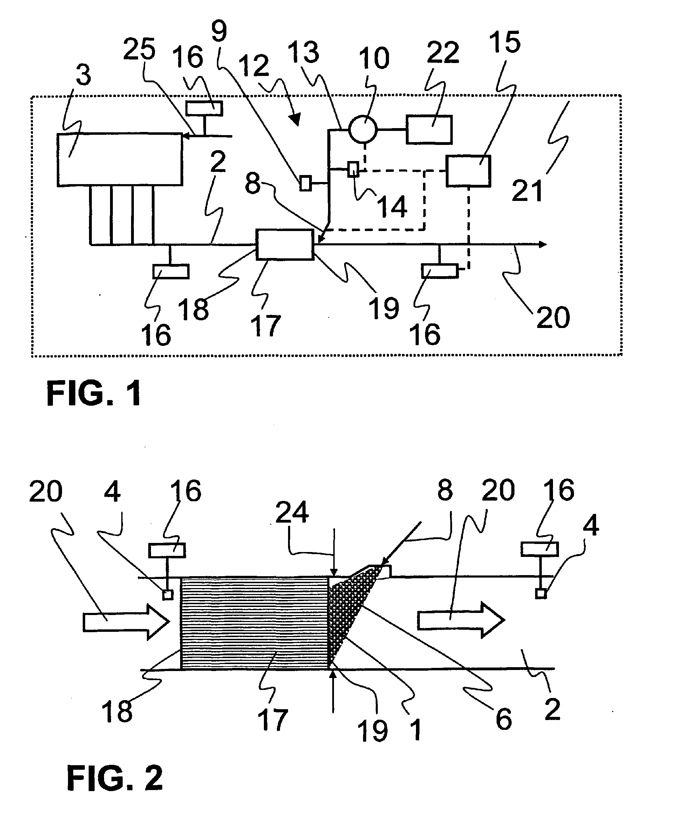

Fig. 1 zeigt die Vorrichtung 12 in einem Kraftfahrzeug 21 mit einer Verbrennungskraftmaschine 3. Dabei ist eine Abgasleitung 2 vorgesehen mit zumindest einer Abgasbehandlungskomponente 17 mit einer ersten Stirnseite 18 und einer zweiten Stirnseite 19, die von einem Abgas in einer Strömungsrichtung 20 durchströmt wird, von der ersten Stirnseite 18 hin zu der zweiten Stirnseite 19. Dabei ist stromabwärts der zweiten Stirnseite 19 der Abgasbehandlungskomponente 17 die Zugabeeinheit 8 der Vorrichtung 12 angeordnet. Diese ist so positioniert, dass entgegen der Strömungsrichtung 20 des Abgases in der Abgasleitung 2 ein durch die Zugabeeinheit 8 zugeführtes Reduktionsmittel zumindest teilweise auf die zweite Stirnseite 19 der Abgasbehandlungskomponente 17 auftrifft. Dazu werden durch die Vorrichtung 12 Tropfen mit einer bestimmten Größe bereitgestellt, die entgegen der Strömungsrichtung 20 des Abgases in die Abgasleitung 2 zugeführt werden und dementsprechend zumindest teilweise auf die zweite Stirnseite 19 einer Abgasbehandlungskomponente 17 auftreffen. Die Vorrichtung 12 umfasst einen Reduktionsmitteltank 22, eine Pumpe 10, einen Druckschwingungsdämpfer 9, ein Druckregelventil 14 und eine Zugabeeinheit 8, die miteinander durch eine Reduktionsmittelleitung 13 verbunden sind. Zusätzlich sind Abgassensoren 16 an unterschiedlichen Stellen der Abgasleitung 2 oder an Leitungen der Luftzuführseite 25 der Verbrennungskraftmaschine 3 vorgesehen, die einer Steuereinheit 15 insbesondere verschiedene Abgasparameter 4 übermitteln. Durch Abgassensoren 16 an der Luftzuführseite 25 der Verbrennungskraftmaschine können durch die Bestimmung des Luftmassenstroms (oder durch dessen Herleitung aus einem Unterdruck in der Leitung und Drehzahl der Verbrennungskraftmaschine 3) auch Abgasparameter 4 in der Abgasleitung 2 bestimmt werden. Die Steuereinheit 15 ist zudem zumindest mit der Pumpe 10 der Druckregelventile 14 und der Zugabeeinheit 8 verbunden. Das Druckregelventil 14 kann zudem insbesondere mit einer Rücklaufleitung verbunden sein, durch die Reduktionsmittel aus der Reduktionsmittelleitung 13 in den Tank 22 zurückgeführt werden kann.

Fig. 2 zeigt ein Detail der Abgasleitung 2 mit einer Abgasbehandlungskomponente 17, die eine erste Stirnseite 18 und eine zweite Stirnseite 19 aufweist und die von einem Abgas in einer Strömungsrichtung 20 von erster Stirnseite 18 zu zweiter Stirnseite 19 durchströmt wird. Dabei weist das Abgas an verschiedenen Stellen der Abgasleitung 2 gegebenenfalls unterschiedliche Abgasparameter 4 (z. B. Abgastemperatur, Abgasgeschwindigkeit, etc.) auf, die durch Abgassensoren 16 erfasst werden. Stromabwärts der Abgasbehandlungskomponente 17 ist die Zugabeeinheit 8 angeordnet, durch die ein Reduktionsmittel 1 in Form von Tropfen 6 bevorzugt auf die zweite Stirnseite 19 der Abgasbehandlungseinheit 17 aufgebracht wird. Die Verteilung der Tropfen 6 des Reduktionsmittels 1 erfolgt bevorzugt gleichmäßig über den gesamten Querschnitt 24 der Abgasleitung, insbesondere gleichmäßig über den größtmöglichen vom Reduktionsmittel 1 erreichbaren Querschnitt 24.

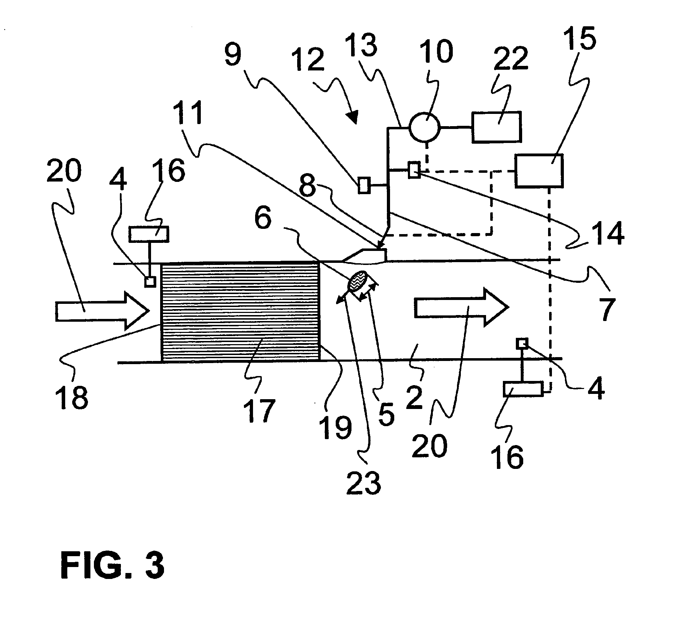

Fig. 3 zeigt eine weitere Ausgestaltung der Vorrichtung 12 in einem Kraftfahrzeug. Dabei wird in die Abgasleitung 2 stromabwärts einer Abgasbehandlungskomponente 17 mit einer ersten Stirnseite 18 und einer zweiten Stirnseite 19 ein Tropfen 6 mit einer Größe 5 zugeführt, der von der Zugabeeinheit 8 in die Abgasleitung 2 abgegeben wird und sich entlang einer Tropfenbahn 23 bewegt. Diese Tropfenbahn 23 wird im Wesentlichen durch Abgasparameter 4 beeinflusst. Daher wird durch die Vorrichtung 12 ein erster Förderdruck 7 in der Reduktionsmittelleitung 13 eingestellt, so dass bestimmte Größen 5 der Tropfen 6 bevorzugt erzeugbar sind, die ein Auftreffen der Tropfen 6 auf die zweite Stirnseite 19 der Abgasbehandlungskomponente 17 ermöglichen. Die notwendigen Daten zur Erfassung der Abgasparameter 4 erfolgt durch Abgassensoren 16, die einerseits stromabwärts der Abgasbehandlungskomponente 17 aber auch stromaufwärts derselben oder innerhalb der Abgasbehandlungskomponente 17 angeordnet sein können. Diese Abgassensoren 16 übermitteln ihre Daten über Steuerleitungen oder über Funk an eine Steuerung 15, die zudem zumindest mit der Zugabeeinheit 8, einem Druckregelventil 14 und einer Pumpe 10 verbunden ist. Die Vorrichtung 12 weist neben der Zugabeeinheit 8 einen Reduktionsmitteltank 22, eine Pumpe 10, einen Druckschwingungsdämpfer 9 sowie ein Druckregelventil 14 auf, die durch eine Reduktionsmittelleitung 13 miteinander verbunden sind. Durch die Steuereinheit 15 wird ein erster Förderdruck 7 in der Reduktionsmittelleitung 13 bestimmt. Im Betrieb der Vorrichtung 12 kann es zu Schwankungen des jeweils eingestellten ersten Förderdruckes 7 kommen. Dieser tatsächliche Druck in der Reduktionsmittelleitung 13 wir als zweiter Förderdruck 11 bezeichnet, der entsprechend gesteuert wird, so dass er von dem ersten Förderdruck 7 möglichst wenig abweicht. Das Reduktionsmittel 1 verlässt die Zugabeeinheit 8 unter dem zweiten Förderdruck 11, der möglichst dem ersten Förderdruck 7 entspricht.

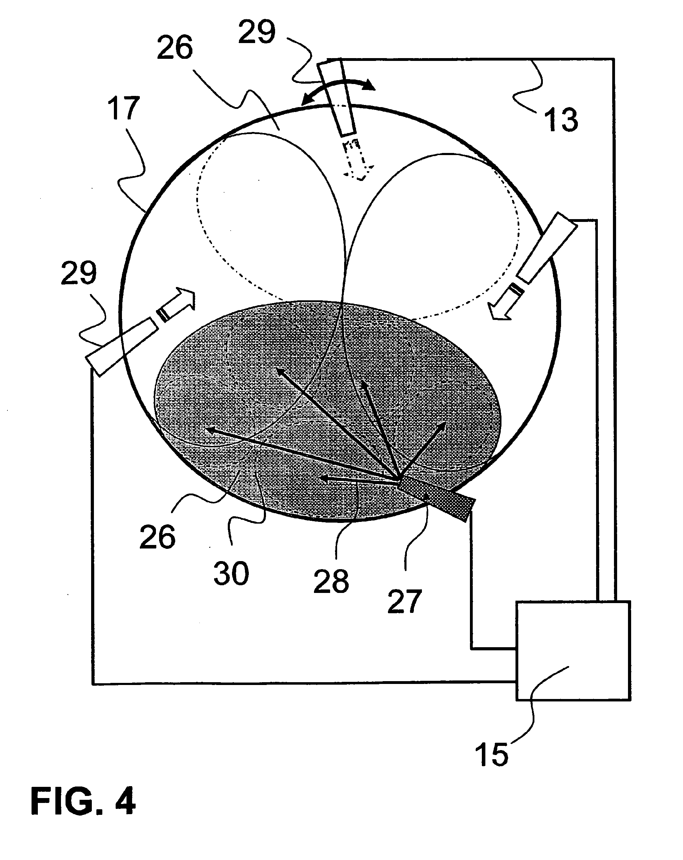

Fig. 4 zeigt nunmehr eine rückwärtige Ansicht auf eine Abgasbehandlungskomponente 17. Stromabwärts der Abgasbehandlungskomponente 17 sind über den Umfang der Abgasleitung 4 Düsen 29 vorgesehen, die mittels der Steuereinheit 15 eine gleichmäßige Benetzung der Abgasbehandlungskomponente 17 mit flüssigem Reduktionsmittel ermöglich. Folglich ist hier die Zugabeeinheit mit vier Düsen 29 gebildet. Die Düsen 29 sind starr angebunden, dies ist aber auch nicht zwingend erforderlich; oben in Fig. 4 ist eine Düse 29 als beweglich bzw. verschwenkbar (siehe Doppelpfeil) ausgebildet. An derselben Düse 29 ist auch veranschaulicht, dass dieser Düse ein separater Auftreffbereich 26 für flüssiges Reduktionsmittel zugeordnet werden kann, veranschaulicht durch eine entsprechende Strich-Punkt-Strich-Linie.

Im unteren Bereich der Fig. 4 ist nun veranschaulicht, wie eine Düse während den üblichen Betriebsbedingungen der Verbrennungskraftmaschine erreichbaren Auftreffbereich 26 durch eine gezielte Variation bzw. Modulation der Zugabe-Strategie gleichmäßig erreichen kann. Hierbei stellt die untere Düse einen aktuell betrachteten Zugabeort 27 dar. Ausgehend von diesem Zugabeort 27 kann der Auftreffbereich 26 (dunkel markiert) gleichmäßig benetzt werden, indem die Zugabebereiche 30 (angedeutet durch gestrichelte Linie) moduliert werden. Ein Zugabebereich 30 stellt dabei die Auftrefffläche von flüssigem Reduktionsmittel während eines Zugabe-Zyklus dar. Es ist zu erkennen, dass zur Abdeckung des gesamten Auftreffbereiches 26 die Form bzw. Größe des Zugabereiches 30 und/oder die Zugaberichtung 28 verändert wird. Es ist nun erkennbar, dass bspw. mit fünf Zugabe-Zyklen der gesamte Auftreffbereich 26 im Wesentlichen gleichmäßig mit Reduktionsmittel besprüht werden kann. Dabei ist nicht notwendig, dass tatsächlich alle Zugabebereiche 30 benachbart zueinander angeordnet sind und/oder alle Zugabebereiche 30 mit der gleichen Menge an Reduktionsmittel und/oder mit der gleichen Häufigkeit benetzt werden. Vielmehr sind hier die Abgas-Parameter und/oder das Einlagerungs- bzw. Verdampfungsverhalten der Abgasbehandlungskomponente 17 mit zu berücksichtigen. Regelmäßig ist im zentralen Bereich der Abgasbehandlungskomponente 17 eine höhere Einlagerungskapazität und/oder Verdampfungskapazität aufgrund der höheren Temperaturen des Abgases in diesem Bereich bzw. der intensiveren Durchströmung der Abgasbehandlungskomponente 17 festzustellen. Dies kann auch bei der Zugabe-Strategie berücksichtigt werden.

Die Modulation der Zugabebereiche 30 erfolgt gezielt durch bspw. eine Beeinflussung des Förderdruckes in den jeweiligen Reduktionsmittelleitungen durch eine entsprechende Regelung der Steuereinheit 15. Dies wird überlagert von den Abgas-Parametern, die eine Ablenkung bzw. Aufweitung bzw. Veränderung des Zugabebereiches 30 zur Folge haben. Dies wird aber bevorzugt bei der Zugabe-Strategie berücksichtigt bzw. kompensiert.

### Bezugszeichenliste

- 1: Reduktionsmittel
- 2: Abgasleitung
- 3: Verbrennungskraftmaschine
- 4: Abgasparameter
- 5: Größe
- 6: Tropfen
- 7: Erster Förderdruck
- 8: Zugabeeinheit
- 9: Druckschwingungsdämpfer
- 10: Pumpe
- 11: Zweiter Förderdruck
- 12: Vorrichtung
- 13: Reduktionsmittelleitung
- 14: Druckregelventil
- 15: Steuereinheit
- 16: Abgassensor
- 17: Abgasbehandlungskomponente
- 18: Erste Stirnseite
- 19: Zweite Stirnseite
- 20: Strömungsrichtung
- 21: Kraftfahrzeug
- 22: Reduktionsmitteltank
- 23: Tropfenbahn
- 24: Querschnitt
- 25: Luftzuführseite
- 26: Auftreffbereich
- 27: Zugabeort
- 28: Zugaberichtung
- 29: Düse
- 30: Zugabebereich

## Patentansprüche

1. Verfahren zur tropfenförmigen Zugabe eines flüssigen Reduktionsmittels (1), welches eine Harnstoff-Wasser-Lösung ist, in eine Abgasleitung (2) einer Verbrennungskraftmaschine (3), umfassend wenigstens die folgenden Schritte:
a) Erfassen zumindest eines Abgasparameters (4) während des Betriebes der Verbrennungskraftmaschine (3),
b) Bestimmen einer Größe (5) eines Tropfens (6) des zuzugebenden Reduktionsmittels (1) in Abhängigkeit des Abgasparameters (4),
c) Einstellen eines ersten Förderdruckes (7) des Reduktionsmittels (1) hin zur Abgasleitung (2) in Abhängigkeit der bestimmten Größe (5) des Tropfens (6),
d) Zugabe des Reduktionsmittels (1) über eine Zugabeeinheit (8) in die Abgasleitung (2).

2. Verfahren gemäß Patentanspruch 1, wobei die Zugabe des flüssigen Reduktionsmittels (1) stromabwärts einer Abgasbehandlungskomponente (17) und entgegen einer Strömungsrichtung (20) eines Abgases in der Abgasleitung erfolgt (2) und die Größe (5) eines Tropfens (6) derart eingestellt wird, dass eine gleichmäßige Verteilung des Reduktionsmittels auf einem Auftreffbereich (26) der Abgasbehandlungskomponente (17) erreicht wird.

3. Verfahren gemäß Patentanspruch 1 oder 2, wobei der Abgasparameter (4) zumindest ein Abgas-Parameter der Gruppe:
- Abgasvolumenstrom,
- Abgasströmungsgeschwindigkeit,
- Abgasmassenstrom,
- Abgastemperatur,
- Abgasdruck
umfasst.

4. Verfahren gemäß einem der vorgenannten Patentansprüche, wobei in Schritt c) der erste Förderdruck (7) zwischen 3 bar und 25 bar einstellbar ist.

5. Verfahren gemäß einem der vorgenannten Patentansprüche, wobei bei der Zugabe des Reduktionsmittels zumindest ein Zugabe-Parameter der nachfolgenden Gruppe variiert wird:
- der Förderdruck (7),
- die Größe (5) der Tropfen (7),
- ein Zugabebereich (30) auf der Abgasbehandlungskomponente (17),
- ein Zugabeort (27) des Reduktionsmittels (1),
- eine Zugaberichtung (28) des Reduktionsmittels (1).

6. Verfahren gemäß Patentanspruch 5, wobei mindestens ein Zugabe-Parameter variiert wird während ein Abgas-Parameter konstant ist.

7. Verfahren gemäß einem der vorgenannten Patentansprüche, wobei in Schritt d) die Zugabe mit einer Größe (5) der Tropfen (6) zwischen 10 µm und 200 µm mittlerer Sauter-Durchmesser erfolgt.

8. Verfahren gemäß einem der vorgenannten Patentansprüche, wobei zumindest 60 % der in Schritt d) zugegebenen Tropfen (6) eine entsprechend Schritt b) bestimmte Größe (5) aufweisen oder größer sind.

9. Verfahren gemäß einem der vorgenannten Patentansprüche, wobei die Zugabe des Reduktionsmittels (1) derart vorgenommen wird, dass während des Betriebes der Verbrennungskraftmaschine eine gleichmäßige Benetzung der Stirnseite der Abgasbehandlungskomponente (17) mit den Tropfen (6) des Reduktionsmittels (1) erfolgt.

10. Vorrichtung (12) zur tropfenförmigen Zugabe eines flüssigen Reduktionsmittels (1), welches eine Harnstoff-Wasser-Lösung ist, in eine Abgasleitung (2), zumindest aufweisend
- eine Pumpe (10) zum Fördern des Reduktionsmittels (1),
- eine Zugabeeinheit (8) zum Einbringen des Reduktionsmittels (1) in die Abgasleitung (2),
- eine Reduktionsmittelleitung (13) zur strömungstechnischen Verbindung der Pumpe (10) mit der Zugabeeinheit (8),
- ein Druckregelventil (14) und ein Druckschwingungsdämpfer (9), beide angeordnet zwischen der Pumpe (10) und der Zugabeeinheit (8), sowie
- eine Steuereinheit (15) zur Steuerung von zumindest Pumpe (10), Zugabeeinheit (8) und Druckregelventil (14),
wobei die Steuereinheit (15) mit zumindest einem Abgassensor (16) zum Bestimmen wenigstens eines Abgasparameters (4) verbunden ist und die Steuereinheit (15) dazu dient, eine bestimmte Größe (5) der Tropfen (6) des flüssigen Reduktionsmittels an der Zugabeeinheit (8) zur Zugabe des Reduktionsmittels in die Abgasleitung (2) durch die Steuerung eines ersten Förderdrucks (7) einzustellen.

11. Vorrichtung (12) gemäß Patentanspruch 10, wobei der Abgassensor (16) zum Bestimmen wenigstens eines Abgasparameters (4) an der Luftzuführseite (25) einer Verbrennungskraftmaschine (3) angeordnet ist.

12. Vorrichtung (12) gemäß einem der Patentansprüche 10 bis 11, wobei die Zugabeeinheit (8) zumindest eine Mehrzahl von Düsen (29) oder wenigstens eine bewegliche Düse (29) umfasst.

13. Vorrichtung (12) gemäß einem der Patentansprüche 10 bis 12, wobei die Steuereinheit (15) eingerichtet ist zur Durchführung eines Verfahrens nach einem der Patentansprüche 1 bis 9.

## Claims

1. Method for the addition, in droplet form, of a liquid reducing agent (1) which is urea-water-solution into an exhaust line (2) of an internal combustion engine (3), comprising at least the following steps:
a) detecting at least one exhaust-gas parameter (4) during the operation of the internal combustion engine (3),
b) determining a size (5) of a droplet (6) of the reducing agent (1), which is to be added, as a function of the exhaust-gas parameter (4),
c) setting a first delivery pressure (7) of the reducing agent (1) towards the exhaust line (2) as a function of the determined size (5) of the droplet (6),
d) adding the reducing agent (1) into the exhaust line (2) by means of an adding unit (8).

2. The method according to claim 1, wherein the addition of the liquid reducing agent (1) takes place downstream of an exhaust-gas treatment component (17) and counter to a flow direction (20) of an exhaust gas in the exhaust line (2), and the size (5) of a droplet (6) is set such that a uniform distribution of the reducing agent over an impingement region (26) of the exhaust-gas treatment component (17) is attained.

3. The method according to claim 1 or 2, wherein the exhaust-gas parameter (4) comprises at least one exhaust-gas parameter from the group:
- exhaust-gas volume flow,
- exhaust-gas flow speed,
- exhaust-gas mass flow,
- exhaust-gas temperature,
- exhaust-gas pressure.

4. The method according to one of the preceding claims, wherein in step c), the first delivery pressure (7) can be set between 3 bar and 25 bar.

5. The method according to one of the preceding claims, wherein during the addition of the reducing agent, at least one adding parameter from the following group is varied:
- the delivery pressure (7),
- the size (5) of the droplet (6),
- an adding region (30) on the exhaust-gas treatment component (17),
- an adding location (27) of the reducing agent (1),
- an adding direction (28) of the reducing agent (1).

6. The method according to claim 5, wherein at least one adding parameter is varied while an exhaust-gas parameter is constant.

7. The method according to one of the preceding claims, wherein in step d), the addition takes place with a size (5) of the droplets (6) of between 10 µm and 200 µm Sauter mean diameter.

8. The method according to one of the preceding claims, wherein at least 60% of the droplets (6) added in step d) have a size (5) determined according to step b) or are larger.

9. The method according to one of the preceding claims, wherein the addition of the reducing agent (1) is carried out such that, during the operation of the internal combustion engine, the end side of the exhaust-gas treatment component (17) is uniformly wetted by the droplets (6) of the reducing agent (1).

10. A device (12) for the addition, in droplet form, of a liquid reducing agent (1) which is urea-water-solution into an exhaust line (2), at least having
- a pump (10) for delivering the reducing agent (1),
- an adding unit (8) for introducing the reducing agent (1) into the exhaust line (2),
- a reducing agent line (13) for fluidic connecting the pump (10) to the adding unit (8),
- a pressure regulating valve (14) and a pressure oscillation damper (9), both arranged between the pump (10) and the adding unit (8), and
- a control unit (15) for controlling at least the pump (10), adding unit (8) and pressure regulating valve (14),
wherein the control unit (15) is connected to at least one exhaust-gas sensor (16) for determining at least one exhaust-gas parameter (4) and wherin the control unit (15) serves for determining a size (5) of the droplets (6) of the liquid reducing agent at the adding unit (8) for introducing the reducing agent in the exhaust line (2) by controlling a first delivery pressure (7).

11. The device (12) according to claim 10, wherein the exhaust-gas sensor (16) for determining at least one exhaust-gas parameter (4) is arranged on the air supply side (25) of an internal combustion engine (3).

12. The device (12) according to one of claims 10 to 11, wherein the adding unit (8) comprises at least a multiplicity of nozzles (29) or at least one movable nozzle (29).

13. The device (12) according to one of claims 10 to 12, wherein the control unit (15) is configured to carry out a method according to one of claims 1 to 9.

## Revendications

1. Procédé permettant d'introduire un agent de réduction liquide (1) sous forme de gouttes, lequel agent est une solution d'eau et d'urée, dans une conduite de gaz d'échappement (2) d'un moteur à combustion interne (3), comprenant au moins les étapes suivantes :
a) détecter au moins un paramètre de gaz d'échappement (4) pendant le fonctionnement du moteur à combustion interne (3),
b) déterminer une taille (5) d'une goutte (6) de l'agent de réduction (1) à ajouter en fonction du paramètre de gaz d'échappement (4),
c) ajuster une première pression de refoulement (7) de l'agent de réduction (1) vers la conduite de gaz d'échappement (2) en fonction de la taille déterminée (5) de la goutte (6),
d) ajouter l'agent de réduction (1) par le biais d'une unité d'ajout (8) dans la conduite de gaz d'échappement (2).

2. Procédé selon la revendication 1, dans lequel l'ajout de l'agent de réduction liquide (1) s'effectue en aval d'un composant de traitement de gaz d'échappement (17) et à l'encontre d'une direction d'écoulement (20) d'un gaz d'échappement dans la conduite de gaz d'échappement (2) et la taille (5) d'une goutte (6) est ajustée de telle sorte que l'on obtienne une répartition uniforme de l'agent de réduction sur une région d'incidence (26) du composant de traitement de gaz d'échappement (17).

3. Procédé selon la revendication 1 ou 2, dans lequel le paramètre de gaz d'échappement (4) comprend au moins un paramètre de gaz d'échappement parmi le groupe suivant :
- débit volumique de gaz d'échappement,
- vitesse d'écoulement de gaz d'échappement,
- débit massique de gaz d'échappement,
- température de gaz d'échappement,
- pression de gaz d'échappement.

4. Procédé selon l'une quelconque des revendications précédentes, dans lequel à l'étape c), la première pression de refoulement (7) peut être ajustée entre 3 bars et 25 bars.

5. Procédé selon l'une quelconque des revendications précédentes, dans lequel lors de l'ajout de l'agent de réduction, au moins un paramètre d'ajout parmi le groupe suivant est modifié :
- la pression de refoulement (7),
- la taille (5) des gouttes (7),
- une région d'ajout (30) sur le composant de traitement de gaz d'échappement (17),
- un lieu d'ajout (27) de l'agent de réduction (1),
- une direction d'ajout (28) de l'agent de réduction (1).

6. Procédé selon la revendication 5, dans lequel au moins un paramètre d'ajout est modifié tandis qu'un paramètre de gaz d'échappement est constant.

7. Procédé selon l'une quelconque des revendications précédentes, dans lequel à l'étape d), l'ajout est effectué avec une taille (5) des gouttes (6) comprise entre 10 µm et 200 µm de diamètre moyen de Sauter.

8. Procédé selon l'une quelconque des revendications précédentes, dans lequel au moins 60 % des gouttes (6) ajoutées à l'étape d) présentent une taille (5) déterminée en fonction de l'étape b) ou une taille supérieure.

9. Procédé selon l'une quelconque des revendications précédentes, dans lequel l'ajout de l'agent de réduction (1) est effectué de telle sorte que pendant le fonctionnement du moteur à combustion interne, il se produise un mouillage uniforme de la face frontale du composant de traitement de gaz d'échappement (17) avec les gouttes (6) de l'agent de réduction (1).

10. Dispositif (12) permettant d'introduire un agent de réduction liquide (1) sous forme de gouttes, lequel agent est une solution d'eau et d'urée, dans une conduite de gaz d'échappement (2), présentant au moins
- une pompe (10) pour refouler l'agent de réduction (1),
- une unité d'ajout (8) pour introduire l'agent de réduction (1) dans la conduite de gaz d'échappement (2),
- une conduite d'agent de réduction (13) pour la connexion fluidique de la pompe (10) à l'unité d'ajout (8),
- une soupape de régulation de la pression (14) et un amortisseur d'oscillations de pression (9), tous deux étant disposés entre la pompe (10) et l'unité d'ajout (8), et
- une unité de commande (15) pour commander au moins la pompe (10), l'unité d'ajout (8) et la soupape de régulation de pression (14),
l'unité de commande (15) étant connectée à au moins un capteur de gaz d'échappement (16) pour déterminer au moins un paramètre de gaz d'échappement (4) et l'unité de commande (15) servant à ajuster une taille déterminée (5) des gouttes (6) de l'agent de réduction liquide au niveau de l'unité d'ajout (8) pour ajouter l'agent de réduction dans la conduite de gaz d'échappement (2) par la commande d'une première pression de refoulement (7).

11. Dispositif (12) selon la revendication 10, dans lequel le capteur de gaz d'échappement (16) est prévu pour déterminer au moins un paramètre de gaz d'échappement (4) au niveau du côté d'alimentation en air (25) d'un moteur à combustion interne (3).

12. Dispositif (12) selon l'une quelconque des revendications 10 à 11, dans lequel l'unité d'ajout (8) comprend au moins une pluralité de buses (29) ou au moins une buse mobile (29).

13. Dispositif (12) selon l'une quelconque des revendications 10 à 12, dans lequel l'unité de commande (15) est prévue pour mettre en oeuvre un procédé selon l'une quelconque des revendications 1 à 9.
